# EUROPÄISCHE PATENTANMELDUNG

(11) **EP 3 839 592 A1**
(43) Veröffentlichungstag der Anmeldung: **23.06.2021**
(21) Anmeldenummer: 19465596.5
(22) Anmeldetag: 19.12.2019
(51) Int. Cl.: G02B 7/182

(54) **ANTRIEBSEINHEIT**

(71) Anmelder: Continental Automotive GmbH, 30165 Hannover (DE)
(72) Erfinder: Novac, Andrei - c/o Continental Automotive GmbH, 65824 Schwalbach a. Ts. (DE)

(57) **Zusammenfassung**

Die Erfindung betrifft eine Antriebseinheit (17) für ein verstellbares, flächiges Reflexelement (12) in einem Fahrzeug, insbesondere für eine Spiegeleinheit (10) eines Head-up-Displays, wobei die Antriebseinheit (17) zumindest zwei Aktuatoren (16) aufweist, die am Reflexelement (12) angreifen und dieses in einer Bewegungsrichtung, insbesondere senkrecht zur Ebene des Reflexelements (12), bewegen können. Die Aktuatoren (16) sind zumindest abschnittsweise aus einer Formgedächtnislegierung hergestellt.

Die Erfindung betrifft des Weiteren eine Spiegeleinheit (10) mit einer solchen Antriebseinheit.

## Beschreibung

Die Erfindung betrifft eine Antriebseinheit für ein verstellbares, flächiges Reflexelement in einem Fahrzeug, insbesondere für eine Spiegeleinheit eines Head-up-Displays.

Anzeigevorrichtungen in einem Fahrzeug, insbesondere Head-up-Display, weisen ein Reflexelement, beispielsweise eine Spiegeleinheit auf, um Informationen in das Sichtfeld des Fahrers zu projizieren. Um die Position der widergegebenen Informationen einzustellen, beispielsweise auf die Sitzposition und die Größe des Fahrers, sind diese Reflexelemente verstellbar.

Beispielsweise sind die Reflexelemente um eine Drehachse verschwenkbar, wobei ein Drehantrieb vorgesehen ist, der Drehachse oder am Reflexelement angreift. Des Weiteren sind Kulissenführungen bekannt, um das Reflexelement zu verstellen.

Diese Lagerungen und Antriebe benötigen aber viele Einzelteile, so dass die Herstellung sowie die Montage sehr aufwändig sind.

Aufgabe der Erfindung ist es, eine Antriebsbaugruppe für ein solches Reflexelement bereitzustellen, die einen einfachen und kostengünstigen Aufbau aufweist.

Zur Lösung der Aufgabe ist eine Antriebseinheit für ein verstellbares, flächiges Reflexelement in einem Fahrzeug vorgesehen, insbesondere für einen Spiegel eines Head-up-Displays, wobei die Antriebseinheit zumindest zwei Aktuatoren aufweist, die am Reflexelement angreifen und dieses in einer Bewegungsrichtung, insbesondere senkrecht zur Ebene des Reflexelements, bewegen können. Die Aktuatoren sind zumindest abschnittsweise aus einer Formgedächtnislegierung hergestellt.

Formgedächtnislegierungen oder -metalle können ihre Form in Abhängigkeit von äußeren Einflüssen, beispielsweise Strom oder Wärme ändern. Über die Formänderung ist eine Bewegung der an den Aktuatoren aus einer Formgedächtnislegierung montierten Teilen, beispielsweise eines Reflexelements möglich. Der Vorteil der Aktuatoren Formgedächtnislegierung ist, dass diese weniger bewegliche Bauteile benötigen. Zudem sind keine aufwändigen Lagerungen am Reflexelement oder einem Gehäuse erforderlich, um das Reflexelement in Gehäuse zu lagern. Des Weiteren sind keine aufwändigen beweglichen Befestigungen der Aktuatoren am Reflexelement oder am Gehäuse erforderlich.

Vorzugsweise sind die Aktuatoren Linearaktuatoren, so dass die Antriebsrichtung der Aktuatoren im Wesentlichen in Bewegungsrichtung erfolgt.

Beispielsweise weisen die Aktuatoren einen in einer Führung verschiebbar gelagerten Stempel auf, wobei der Stempel von einem Element aus einer Formgedächtnislegierung, insbesondere eine Feder, entlang der Führung bewegt werden kann.

Vorzugsweise sind zumindest drei Aktuatoren vorgesehen, wobei zumindest drei Aktuatoren nicht auf einer gemeinsamen Geraden angeordnet, um eine stabile Lagerung des Reflexelements sicherzustellen und um ein Verschwenken des Reflexelement um zumindest zwei Achse sicherzustellen.

Beispielsweise sind die Aktuatoren federnd am Reflexelement gelagert, so dass für die Lagerung am Reflexelement weniger oder gar keine zusätzlichen Bauteile, insbesondere keine bewegliche Lagerung, erforderlich sind.

Zur Lösung der Aufgabe ist des Weiteren eine Spiegeleinheit für ein Head-Up-Display vorgesehen, mit einem Reflexelement, insbesondere einem Spiegel, und mit einer vorstehend beschriebenen Antriebseinheit. Die Aktuatoren sind mit einem Ende am Spiegel und mit einem zweiten Ende in einem Gehäuse gelagert.

Insbesondere können die Aktuatoren im Gehäuse und am Spiegel federnd gelagert sein.

Zusätzlich kann ein Lagerelement vorgesehen sein, mit dem das Reflexelement schwenkbar im Gehäuse gelagert ist.

Insbesondere ist eine Steuerung vorgesehen, um die Aktuatoren ansteuern zu können.

Weitere Vorteile und Merkmale finden sich in der nachfolgenden Beschreibung in Verbindung mit den beigefügten Zeichnungen. In diesen zeigen:
- Figur 1: eine Spiegeleinheit für ein Head-Up-Display
- Figur 2: eine schematische Darstellung einer zweiten Ausführungsform einer Spiegeleinheit für ein Head-Up-Display;
- Figur 3: eine perspektivische Ansicht eines Aktuators; und
- Figur 4: eine Schnittansicht des Aktuators aus Figur 3.

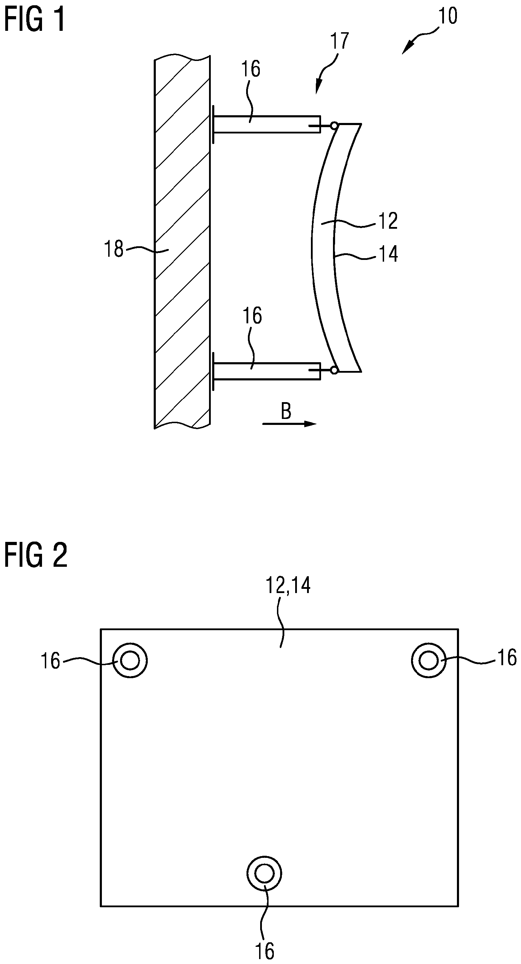

Figur 1 zeigt eine Spiegeleinheit 10 für ein Head-Up-Display in einem Fahrzeug gezeigt. Das Head-up-Display kann Informationen in den Sichtbereich des Fahrers, insbesondere an die Frontscheibe des Fahrzeugs projizieren. Die Spiegeleinheit 10 hat ein Reflexelement 12, an dem eine reflektierende Oberfläche 14, insbesondere ein Spiegel, gehalten ist. Die Spiegeleinheit 10 ist über mehrere Aktuatoren 16, die eine Antriebseinheit 17 bilden, beweglich in einem Gehäuse 18 in einem Fahrzeug gelagert.

Die Aktuatoren 16 bestehen zumindest abschnittsweise aus einer Formgedächtnislegierung, so dass diese Ihre Form in Abhängigkeit von äußeren Einflüssen, beispielsweise Strom oder Wärme ändern können. Insbesondere können diese Ihre Form so ändern, dass sich die Länge in einer Bewegungsrichtung B, die insbesondere senkrecht zur Ebene des Reflexelements 12 verläuft, ausdehnen können, um das Reflexelement in Bewegungsrichtung B zu bewegen. Durch die zwei Aktuatoren 16, die sich in Bewegungsrichtung B verlängern oder verkürzen können, ist eine Bewegung des Reflexelements 12, insbesondere ein Verschwenken um eine Schwenkachse S möglich.

Die Aktuatoren 16 können hierbei gelenkig am Reflexelement 12 sowie am Gehäuse 18 gelagert sein. Es ist aber auch möglich, dass diese lediglich federnd am Reflexelement 12 und/oder am Gehäuse 18 befestigt sind, wodurch die Anzahl beweglicher Teile reduziert werden kann.

In Figur 2 ist eine zweite Ausführungsform einer Spiegeleinheit gezeigt. Diese Spiegeleinheit 10 weist drei Aktuatoren auf, die ebenfalls zumindest abschnittsweise aus einer Formgedächtnislegierung bestehen. Die drei Aktautoren 16 sind so angeordnet, dass diese nicht auf einer gemeinsamen Linie am Reflexelement angreifen. Insbesondere bilden die drei Kontaktpunkte mit dem Reflexelement 12 ein Dreieck. Dadurch kann das Reflexelement in zwei, insbesondere senkrecht zueinander verlaufenden Schwenkachsen S1, S2 verschwenkt werden.

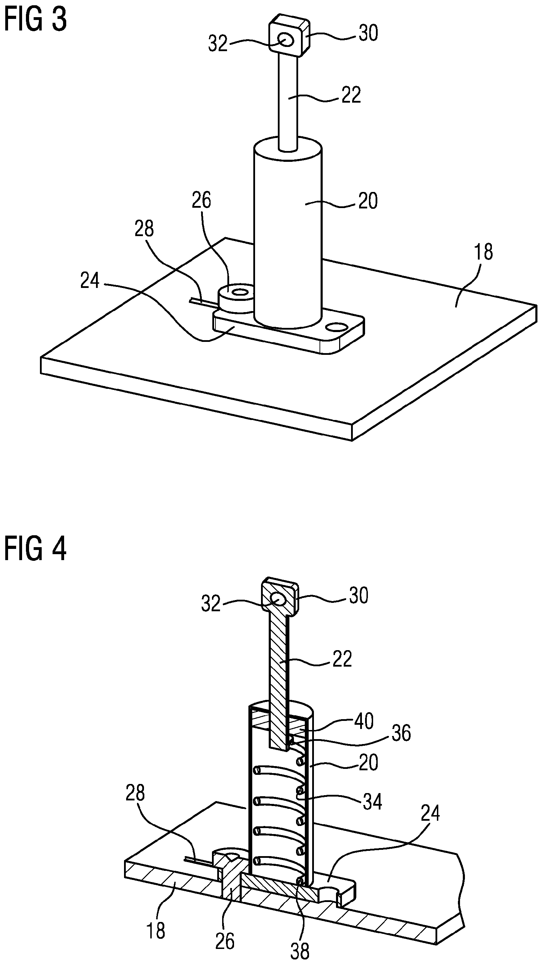

In den Figuren 3 und 4 ist eine Ausführungsform eines Aktuator 16 im Detail gezeigt. Der Aktuator 16 hat eine zylindrisches Führung 20, in der ein Stempel 22 in Längsrichtung verschiebbar gelagert ist.

Die Führung 20 ist mit einer Basisplatte 24 und einem Befestigungsmittel 26, hier einer Schraube, im Gehäuse 18 befestigt. An der Basisplatte 24 ist ein elektrischer Anschluss 28 vorgesehen. Am freien Ende 30 des Stempels 22 ist eine Aufnahme 32 zum Verbinden mit dem Reflexelement 12 vorgesehen.

In der Führung 20 ist eine Feder 34 aus einer Formgedächtnislegierung vorgesehen, die mit einem Ende 36 mit dem Stempel 22 verbunden ist und mit dem entgegengesetzten Ende 38 in der Führung 20 gehalten ist. Die Feder 34 ist mit dem elektrischen Anschluss 28 kontaktiert, sodass an die Feder 28 Strom angelegt werden kann. Durch das Anlegen des Stroms kann die Form der Feder in Längsrichtung der Führung 20 verändert werden, sodass der Stempel 22 aus der Führung heraus gedrückt oder in dieser eingezogen wird. Die Führung 20 weist einen Anschlag 40 auf, um den Bewegungsweg des Stempels 22 zu begrenzen.

Die Feder 34 dehnt sich beim Anlegen des Stroms sehr schnell aus, sodass eine sehr schnelle Bewegung des Reflexelement 12 möglich ist. Wird der Strom abgeschaltet, zieht sich Feder 34 aber verhältnismäßig langsam zusammen. Um auch in die entgegengesetzte Richtung eine schnelle Bewegung zu erzielen, können im Akkumulator zwei entgegengesetzt ausgerichtete Federn 34 vorgesehen sein, also eine Feder, die sich beim Anlegen des Stroms ausdehnt und eine Feder, die sich beim Anlegen des Stroms zusammenzieht.

Optional können auch zwei getrennte Aktuatoren für die entgegengesetzten Richtungen vorgesehen sein. Alternativ kann auch eine konventionelle Feder vorgesehen sein, die entgegen der Ausdehnungsrichtung der Feder 34 wirkt, und diese nach Abschalten des Stroms in eine Ausgangsposition zurück bewegt.

Die Anzahl der Aktuatoren 16 kann in Abhängigkeit von den gewünschten Bewegungsrichtungen des Reflexelement 12 gewählt werden. Insbesondere kann die Anzahl und die Position so gewählt werden, dass alle Bewegungsrichtungen und Drehrichtungen des Reflexelements 12 abgedeckt sind. Insbesondere können auch Aktuatoren vorgesehen sein, die eine Drehbewegung des Reflexelements 12 ermöglichen.

## Patentansprüche

1. Antriebseinheit (17) für ein verstellbares, flächiges Reflexelement (12) in einem Fahrzeug, insbesondere für eine Spiegeleinheit (10) eines Head-up-Displays, wobei die Antriebseinheit (17) zumindest zwei Aktuatoren (16) aufweist, die am Reflexelement (12) angreifen und dieses in einer Bewegungsrichtung, insbesondere senkrecht zur Ebene des Reflexelements (12), bewegen können,
**dadurch gekennzeichnet, dass**
die Aktuatoren (16) zumindest abschnittsweise aus einer Formgedächtnislegierung hergestellt sind.

2. Antriebseinheit nach Anspruch 1, **dadurch gekennzeichnet, dass** die Aktuatoren (16) Linearaktuatoren sind.

3. Antriebseinheit nach einem der Ansprüche 1 und 2, **dadurch gekennzeichnet, dass** die Aktuatoren (16) einen in einer Führung (20) verschiebbar gelagerten Stempel (22) aufweisen, wobei der Stempel von einem Element aus einer Formgedächtnislegierung, insbesondere eine Feder (34), entlang der Führung (20) bewegt werden kann.

4. Antriebseinheit nach einem der vorhergehenden Ansprüche, **dadurch gekennzeichnet, dass** zumindest drei Aktuatoren (16) vorgesehen sind, wobei zumindest drei Aktuatoren (16) nicht auf einer gemeinsamen Geraden angeordnet sind.

5. Antriebseinheit nach einem der vorhergehenden Ansprüche, **dadurch gekennzeichnet, dass** die Aktuatoren (16) federnd am Reflexelement (12) gelagert sind.

6. Spiegeleinheit (10) für ein Head-Up-Display, mit einem Reflexelement (12), insbesondere einem Spiegel, und mit einer Antriebseinheit (17) nach einem der vorhergehenden Ansprüche, wobei die Aktuatoren (16) mit einem Ende am Reflexelement (12) und mit einem zweiten Ende in einem Gehäuse (18) gelagert sind.

7. Spiegeleinheit nach Anspruch 6, **dadurch gekennzeichnet, dass** die Aktuatoren (16) im Gehäuse (18) und am Reflexelement (12) federnd gelagert sind.

8. Spiegeleinheit nach einem der Ansprüche 6 und 7, **dadurch gekennzeichnet, dass** ein Lagerelement vorgesehen ist, mit dem das Reflexelement (12) schwenkbar im Gehäuse (18) gelagert ist.
